# FASCICULE DE BREVET EUROPEEN

(11) **EP 0 462 897 B1**
(45) Date de publication et mention de la délivrance du brevet: **07.09.1994**
(21) Numéro de dépôt: 91401657.1
(22) Date de dépôt: 19.06.1991
(51) Int. Cl.: B01D 11/02

(54) **Colonne pulsée avec garnissage à paniers**
Pulsierende Kolonne mit Füllung in Körben
Pulsating column with packing in baskets

(30) Priorité: 21.06.1990 FR 9007789
(43) Date de publication de la demande: 27.12.1991
(73) Titulaire: COMMISSARIAT A L'ENERGIE ATOMIQUE, 75015 Paris (FR)
(72) Inventeur: Hanssens, Alain, F-30330 Tresques, Cidex 8651 (FR); Morin, Michel, F-84800 l'Isle sur Sorgue (FR)
(74) Mandataire: Dubois-Chabert, Guy

(56) Documents cités:
- GB-A- 721 062
- US-A- 3 881 876
- SOVIET INVENTIONS ILLUSTRATED Section Chemical, semaine B 31, abrégé no. 57661 D/16, 17 septembre 1979, Derwent Publications Ltd., London, GB; & SU - A - 628940 (KIEV FOOD IND INST) 08.09.1978

## Description

L'invention concerne les colonnes pulsées réalisant un échange ou une extraction entre une phase solide et une phase liquide circulant généralement à contre-courant. Le résultat du mélange intime réalisé dans les colonnes pulsées est l'échange ou le transfert d'un produit, tel qu'un soluté d'une phase dans l'autre. Il est ainsi possible d'utiliser des résines échangeuses d'ions pour extraire des composés présents dans des solutions aqueuses, notamment en hydrométallurgie ou dans le domaine des activités agro-alimentaires.

Les colonnes pulsées comportent généralement une partie supérieure munie d'une entrée de la phase lourde, à savoir la phase solide, et d'une sortie de la phase légère, à savoir la phase liquide. L'échange se fait au cours de la descente et de la montée respectives des deux phases dans une partie centrale cylindrique d'axe vertical munie d'un garnissage destine à favoriser le contact entre les deux phases. Une partie inférieure termine la partie centrale et comporte une entrée de la phase légère et une sortie de la phase lourde. L'efficacité du transfert d'un produit, tel qu'un soluté, d'une phase dans l'autre dépend en particulier de la qualité du contact entre les phases en présence. La colonne est donc équipée d'un dispositif de pulsations permettant d'engendrer un mouvement de va-et-vient continu de l'ensemble constitue des deux phases liquide et solide.

Lors du fonctionnement de la colonne pulsée, la phase lourde descend par gravité et la phase liquide monte. Les garnissages sont généralement constitués de plateaux perforés ou de chicanes constituant des obstacles temporaires au cheminement direct des deux phases. Les pulsations imprimées au mélange favorisent le contact entre les deux phases.

De manière générale, les temps de contact en extraction solide-liquide doivent être longs car la cinétique de l'échange est lente. Il est donc nécessaire de disposer de colonnes pulsées de hauteur importante afin d'obtenir un bon rendement. En effet, la phase solide, introduite en tête de colonne, circule par gravité en franchissant au fur et à mesure et trop rapidement les différents obstacles constituant le garnissage de l'intérieur de la colonne pulsée.

Le but de l'invention est de remédier à cet inconvénient en modifiant le concept du garnissage des colonnes pulsées solide-liquide, de manière à pouvoir assurer des temps de séjour élevés de la phase solide dans la colonne pulsée, tout en respectant les conditions d'agitation nécessaires au transfert du soluté à extraire.

A cet effet, l'objet de l'invention est une colonne pulsée d'échange entre une phase liquide et une phase solide, comportant :
- un corps de colonne à l'intérieur duquel est place un garnissage, pour favoriser le contact entre la phase liquide et la phase solide ;
- des moyens de pulsations de l'ensemble constitué par la phase liquide et la phase solide, au moyen d'une première pulsation de faible énergie mais de fréquence élevée.

Selon l'invention, le garnissage est un empilage alterné de paniers et de couronnes horizontaux, pour que la phase solide remplisse successivement les paniers et passe à travers les couronnes au fur et à mesure qu'elle descend à l'intérieur du corps de colonne. Pour ordonnancer la descente de la phase solide, les moyens de pulsations sont prévus pour fournir des pulsations de forte énergie, mais de faible fréquence, permettant d'évacuer à des instants déterminés les éléments de la phase solide d'un panier pour qu'ils retombent dans le panier situe en dessous.

De la sorte, il est possible de maîtriser le temps de séjour d'une quantité déterminée de la phase solide dans un panier, et par là-même, de réguler le séjour de la phase solide dans la colonne pulsée.

De manière préférentielle, on réalise l'empilage au moyen de plusieurs montants périphériques placés à l'intérieur du corps de colonne et au milieu desquels sont montés coulissants les paniers et les couronnes.

Pour positionner les paniers et les couronnes entre eux, on utilise des entretoises autour des montants.

Chaque panier comprend de préférence un fond perforé. Chaque couronne peut comporter un trou central pour canaliser la phase solide au centre du fût à la sortie de chaque panier. La phase solide sortant d'un panier retombe ainsi inévitablement dans le panier situé juste en dessous.

La présente invention et ses différentes caractéristiques seront mieux comprises à la lecture de la description qui suit, illustrée des figures représentant respectivement :
- figure 1, une vue en coupe d'une colonne pulsée selon l'invention schématisant le fonctionnement de celle-ci ;
- figure 2, une coupe partielle en perspective de la colonne pulsée selon l'invention, détaillant le montage du garnissage.

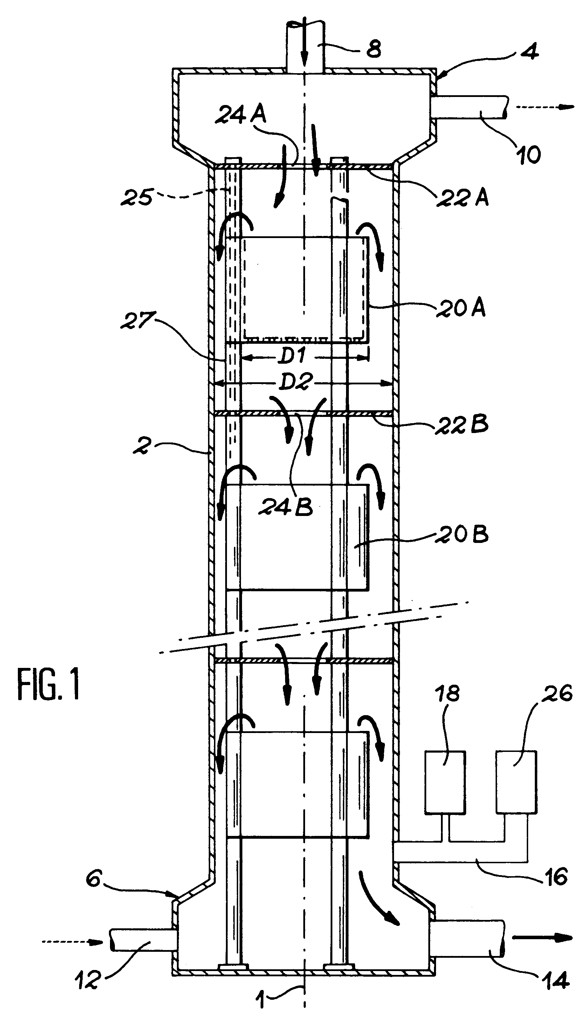

La colonne pulsée de la figure 1 comprend principalement le fût 2 de la colonne, d'axe vertical 1, à l'intérieur duquel s'effectue l'échange, surmonté d'un décanteur supérieur 4 et reposant sur un décanteur inférieur 6.

De manière connue, le décanteur supérieur 4 comprend une arrivée supérieure 8 de la phase lourde, en l'occurrence la phase solide. Il possède également une sortie supérieure 10 de la phase légère, en l'occurrence la phase liquide. De manière analogue, le décanteur inférieur comprend une sortie inférieure 14 de la phase solide et une entrée inférieure 12 de la phase liquide.

Des moyens de pulsations sont schématisés par une tubulure 16, débouchant dans la partie inférieure du fût 2, et reliée à une première source d'air comprimé 18. Ces moyens de pulsations permettent d'appliquer une pression périodique au mélange de la phase liquide et de la phase solide dans le fût de manière à leur imprimer un mouvement de va-et-vient. La pulsation est de faible énergie, mais de fréquence relativement élevée, afin d'assurer une fluidisation des particules solides au sein du liquide.

Selon l'invention, le garnissage du fût 2 est constitué d'un empilement de plusieurs paniers 20 intercalés de couronnes 22. Chaque panier est horizontal et ouvert par le dessus. Le premier panier 20A est de préférence surmonte d'une première couronne 22A.

Chaque couronne 22 (22A ou 22B) est percée d'un trou central 24 (24A ou 24B). La phase solide, issue de l'arrivée supérieure 8, est donc amenée à passer à l'intérieur du premier trou central 24A de la première couronne 22A, comme le montrent les flèches supérieures. De la sorte, la phase solide commence à remplir le premier panier 20A. La phase solide remplit petit à petit ce panier tout en étant soumise constamment à la pulsion de faible énergie, mais de fréquence élevée. L'échange entre la phase liquide et la phase solide est donc effectif lors de ce remplissage.

Selon l'invention, la colonne pulsée possède des moyens de pulsations capables de générer, à périodes ajustables, une pulsation de forte énergie. Ces deuxièmes moyens de pulsations sont symbolisés par une seconde source d'air comprimé 26, reliée à la tubulure 16. De la sorte, une fois le premier panier 20A rempli, une forte impulsion est fournie par les moyens de pulsations, en l'occurrence la deuxième source d'air comprimé 26, pour que le contenu de ce premier panier 20A soit expulse complètement pour retomber à l'extérieur de celui-ci. En effet, chaque panier 20 a un diamètre extérieur D1 inférieur au diamètre interne D2 du fût 2. La matière solide alors expulsée est canalisée par la deuxième couronne 22B. Après avoir franchi le deuxième trou 24B, la phase solide tombe par gravité dans le deuxième panier 20B.

Le processus est ainsi renouvelé pour faire transiter la phase solide d'un panier à l'autre par gravité, au rythme des fortes pulsations imposées par la deuxième source d'air comprimé 26.

On comprend ainsi qu'il est possible de régler le rythme de la descente de la phase solide, et donc de gérer le temps d'échange de cette phase solide avec la phase liquide dans chaque panier 20. Lors de son séjour dans un panier 20, la phase solide est constamment maintenue dans des conditions de fluidisation propices à l'échange de matière avec la phase liquide. L'amplitude des pulsations de faible énergie n'est pas suffisante pour évacuer la phase solide accumulée dans chacun des paniers.

Il est possible de choisir la géométrie et l'espacement de chaque panier 20 et de chaque couronne 22. Il est aussi possible de régler la fréquence des deux types de pulsations. Le positionnement et la fixation des paniers 20 et des couronnes 22 sont réalisés de préférence au moyen de montants 25. Ceux-ci sont positionnés à la périphérie du volume intérieur délimité par le fût 2. Les paniers possèdent des guides périphériques 29 constitués de manchons soudés à la structure cylindrique des paniers 20. Les montants 25 et les guides 29 sont orientes selon des axes verticaux 28. Le positionnement des guides 29 correspondant avec la position des montants 25, il est ainsi possible de réaliser un empilage de paniers 20 par enfilement des guides 29 sur les montants 25.

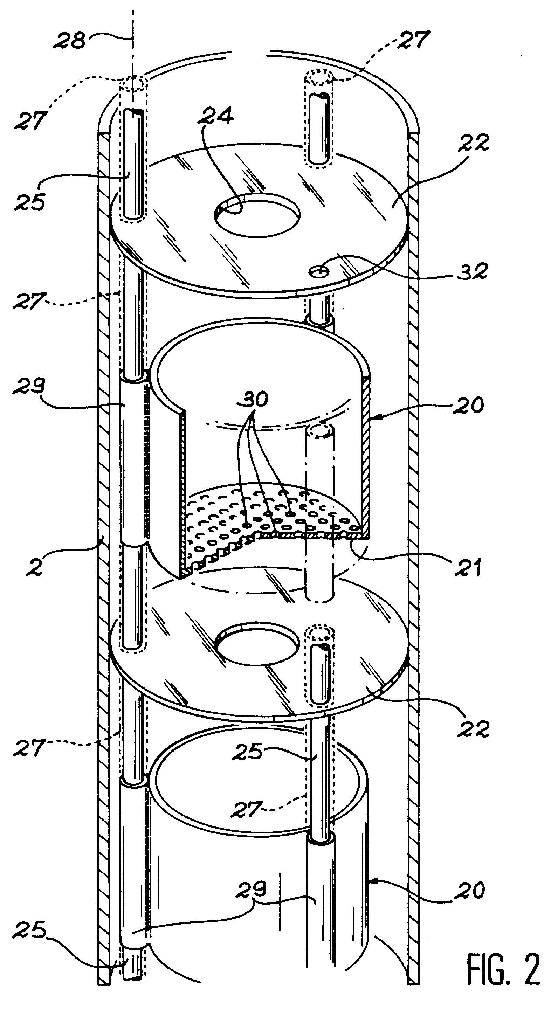

Dans la réalisation représentée sur la figure 2, les montants 25 sont au nombre de trois et sont espacés angulairement de 120° autour de l'axe principal 1 du fût 2. Ceci ne constitue qu'un exemple de réalisation.

Le montage des couronnes 22 s'effectue de la même manière à l'aide des montants 25. En correspondance, des passages 32 sont pratiqués dans les couronnes 22 aux mêmes emplacements que les guides 29, c'est-à-dire centrés autour des axes verticaux 28 des montants 25. Les couronnes 22 font ainsi partie de l'empilement des paniers 20.

L'espacement en hauteur des paniers 20 et des couronnes 22 est réalisé au moyen d'entretoises 27. Celles-ci peuvent être également constituées de manchons pouvant être enfilés autour des montants 25. Le garnissage peut par exemple être réalisé par empilements successifs d'une entretoise, d'un panier, d'une entretoise, d'une couronne, d'une entretoise, d'un panier, d'une entretoise, d'une couronne, et ainsi de suite.

Le choix de l'espacement des paniers et des couronnes constituant le garnissage et le pilotage des pulsations permet d'obtenir, dans la colonne, des valeurs diverses et réglables du temps de séjour de la phase solide à l'intérieur du fût.

Sur la figure 2, le fond 21 du panier 20 a été représenté partiellement, muni d'orifices 30. En effet, de façon préférentielle, le fond 21 de chaque panier 20 peut être réalisé à l'aide d'une plaque perforée ou d'un tissu métallique ou plastique permettant le passage de la phase liquide, mais assurant l'arrêt de la phase solide à l'intérieur du panier 20. Les diamètres des orifices 30 sont donc inférieurs à la majeure partie des particules solides constituant la phase lourde.

Le diamètre extérieur d'une couronne 22 correspond de préférence au diamètre inférieur D2 du fût 2.

Ce concept de garnissage est facilement adaptable pour une phase solide constituée de résine échangeuse d'ions ou tout solide divisé, calibré en spectre et pour une phase liquide concernant l'hydrométallurgie ou les activités agro-alimentaires.

Le temps de séjour de la phase solide dans la colonne pulsée pour extraction est considérablement augmenté par rapport à l'utilisation de garnissage chicané. Cette technique est particulièrement intéressante lors de l'élution des résines échangeuses d'ions, où les cinétiques de transfert sont généralement lentes.

Il est ainsi possible d'utiliser des installations dont la hauteur de colonne ne dépasse couramment pas six mètres.

Les moyens de pulsations ont été représentés par deux sources différentes 18 et 26 d'air comprimé. Ceci n'est qu'un exemple de réalisation, un dispositif mixte pneumatique ou mécanique pouvant également être utilisé.

## Revendications

1. Colonne pulsée d'échange fonctionnant avec une phase liquide et une phase solide et comprenant :
- un fût de colonne (2) à l'intérieur duquel est placé un garnissage pour favoriser l'échange entre la phase liquide et la phase solide ;
- des moyens de pulsations (18) de l'ensemble de la phase liquide et de la phase solide au moyen d'une première pulsation de faible énergie, mais de fréquence élevée,
caractérisée en ce que le garnissage est un empilage alterné de paniers (20, 20A, 20B) et de couronnes horizontales (22, 22A, 22B) pour que la phase solide remplisse successivement les paniers (20, 20A, 20B) et passe à travers les couronnes (22, 22A, 22B), au fur et à mesure qu'elle descend à l'intérieur du fût (2), des moyens de pulsations (26) produisant des pulsations de forte énergie, mais à faible fréquence, permettant d'évacuer à des instants déterminés les éléments de la phase solide d'un panier (20A) pour qu'ils retombent dans le panier se trouvant juste en dessous (20B).

2. Colonne selon la revendication 1, caractérisée en ce qu'elle comprend des montants périphériques (25) placés à l'intérieur du fût (2) et au milieu desquels sont montés coulissants les paniers (20, 20A, 20B) et les couronnes (22, 22A, 22B).

3. Colonne selon la revendication 2, caractérisée en ce qu'elle comprend des entretoises (27) montées autour des montants (25), pour positionner les paniers (20, 20A, 20B) et les couronnes (22, 22A, 22B) entre eux.

4. Colonne selon l'une quelconque des revendications précédentes, caractérisée en ce que chaque panier (20, 20A, 20B) comprend un fond perforé (21).

5. Colonne selon l'une quelconque des revendications précédentes, caractérisé en ce que chaque couronne (22, 22A, 22B) comprend un trou central (24, 24A, 24B) pour canaliser la phase solide au centre du fût (2) à la sortie de chaque panier (20, 20A, 20B).

## Claims

1. Exchange pulsed column functioning with one liquid phase and one solid phase and including:
- a column shaft (2) inside which a lining is placed to favour exchange between the liquid phase and the solid phase;
- means (18) for the pulsation of both the liquid phase and the solid phase by means of a first low energy, high frequency pulsation,
characterized in that the lining is an alternate stack of baskets (20, 20A, 20B) and horizontal rings (22, 22A, 22B) so that the solid phase successively fills the baskets (20, 20A, 20B) and gradually passes through the rings (22, 22A, 22B) as it descends inside the shaft, pulsation means (26) producing high energy energy, low frequency pulsations able to remove at specific moments the elements of the solid phase from one basket (20A) so that they fall back into the basket (20B) situated immediately below.

2. Column according to claim 1, characterized in that it includes peripheral stanchions (25) placed inside the shaft (2) and at the middle of which baskets (20, 20A, 20B) and rings (22, 22A, 22B) are mounted in sliding manner.

3. Column according to claim 2, characterized in that it includes braces (27) mounted around the stanchions (25) so as to position the baskets (20, 20A, 20B) and the rings (22, 22A, 22B) between them.

4. Column according to any one of the preceding claims, characterized in that each basket (20, 20A, 20B) includes a perforated bottom (21).

5. Column according to any one of the preceding claims, characterized in that each ring (22, 22A, 22B) includes a central hole (24, 24A, 24B) so as to channel the solid phase at the centre of the shaft (2) to the outlet of each basket (20, 20A, 20B).

## Patentansprüche

1. Pulsierende Austauschkolonne, welche mit einer flüssigen Phase und einer festen Phase arbeitet, umfassend
- einen Kolonnenkörper (2), in dessen Innerem sich ein Einbau befindet, um den Austausch zwischen der flüssigen Phase und der festen Phase zu unterstützen, und
- Pulsationseinrichtungen (18) für die Gesamtheit der flüssigen Phase und der festen Phase mittels einer ersten Pulsation mit niedriger Energie, aber erhöhter Frequenz,
dadurch gekennzeichnet, daß der Einbau eine alternierende Aufschichtung von Körben (20, 20A, 20B) und horizontalen Kreisringen (22, 22A, 22B) ist, damit die feste Phase nacheinander die Körbe (20, 20A, 20B) füllt und in dem Maße die Kreisringe (22, 22A, 22B) durchquert, wie sie im Inneren des Kolonnenkörpers (2) niedersteigt, wobei Pulsationseinrichtungen (26) Pulsationen mit hoher Energie, aber niedriger Frequenz erzeugen, die es gestatten, zu vorbestimmten Zeitpunkten die Bestandteile der festen Phase aus einem Korb (20A) abzuziehen, damit sie in den Korb fallen, der sich genau darunter (20B) befindet.

2. Kolonne nach Anspruch 1, dadurch gekennzeichnet, daß sie Pfosten (25) umfaßt, die im Innern des Kolonnenkörpers (2) am Rande angebracht sind und inmitten von denen die Körbe (20, 20A, 20B) und die Kreisringe (22, 22A, 22B) verschiebbar befestigt sind.

3. Kolonne nach Anspruch 2, dadurch gekennzeichnet, daß sie Abstandsstücke (27) umfaßt, welche um die Pfosten (25) herum befestigt sind, um die Körbe (20, 20A, 20B) und die Kreisringe (22, 22A, 22B) in fester Stellung zueinander zu halten.

4. Kolonne nach einem der vorangehenden Ansprüche, dadurch gekennzeichnet, daß jeder Korb (20, 20A, 20B) einen gelochten Boden (21) umfaßt.

5. Kolonne nach einem der vorangehenden Ansprüche, dadurch gekennzeichnet, daß jeder Kreisring (22, 22A, 22B) eine zentrale Öffnung (24, 24A, 24B) umfaßt, um die feste Phase in der Mitte des Kolonnenkörpers (2) an den Ausgang jedes Korbes (20, 20A, 20B) zu leiten.
